# EUROPEAN PATENT APPLICATION

(11) **EP 4 230 597 A1**
(43) Date of publication of application: **23.08.2023**
(21) Application number: 22157708.3
(22) Date of filing: 21.02.2022
(51) Int. Cl.: C04B 28/04, C04B 28/06, C04B 28/08, C04B 111/00

(54) **METHODS AND MATERIALS FOR PRINTING 3-DIMENSIONAL STRUCTURES WITH LOW DENSITY AND HIGH COMPRESSIVE STRENGTH**

(71) Applicant: Sika Technology AG, 6340 Baar (CH)
(72) Inventor: LOOTENS, Didier, 8700 Küsnacht (CH); LIARD, Maxime, 8050 Zürich (CH); KUNZ, Joel, 8047 Zürich (CH); BOON, Gary, Fair Lawn, 07410 (US); NEKKANTI, Haripriya, Secaucus, 07094 (US)
(74) Representative: Sika Patent Attorneys

(57) **Abstract**

The present application provides a method of printing a 3-dimensional object, said method comprising the steps of mixing a dry cementitious composition with water, conveying the mixture obtained to a print head, applying the mixture from said print head layer-by-layer to form a 3-dimensional object, curing the 3-dimensional object, wherein said dry cementitious composition comprises at least one cement, at least one type of slag, at least one activator for said slag, and at least two lightweight aggregates of different particle size, characterized in that the cured 3-dimensional object has a density of not more than 1800 kg/m³, preferably not more than 1350 kg/m³, and has a compressive strength of at least 15 MPa after 1 day of curing.

## Description

### Technical field

The present application belongs to the field of additive manufacturing with cementitious materials. It provides methods and materials for the printing of 3-dimensional structures with low density and high compressive strength as well as their uses as infills and for thermal and/or acoustic insulation.

### Background of the invention

The printing of 3-dimensional objects with the use of cementitious materials as binders is well-known (see for example S. Lim et al "Developments in construction-scale additive manufacturing processes" in Automation in Construction, 2012, Vol 21, 262-268). Such techniques are also called additive manufacturing. Additive manufacturing allows for the manufacture of 3-dimensional objects in virtually any shape. One goal in additive manufacturing with cementitious materials is the creation of lightweight objects with sufficiently high strength. This can, for example, be very interesting for the manufacture of thermal and/or acoustic insulation panels for building facades.

Cementitious materials with low density, also called lightweight cementitious materials, are also known. Examples include foam concrete, autoclaved aerated concrete, and mortars with lightweight properties for various applications. One obvious advantage of lightweight cementitious materials is their lower weight, making for example transportation and installation easier. Other advantages are their ability to be used for thermal and/or acoustic insulation. There exists, however, a problem that with decreasing density of a cementitious material also its mechanical strength, especially compressive strength, is decreased. Also, conventional foaming techniques often require difficult processes, for example the use of autoclaves.

A particular problem of many lightweight cementitious materials described in literature is that standard aggregate is replaced by lightweight fillers which lowers the density but also the compressive strength and this is countered by an increased cement content. An increased cement content, however, leads to increased heat flow from the cementitious material during hydration. This may lead to problems of inhomogeneous curing and/or cracking.

In additive manufacturing with cementitious materials a sufficient compressive strength is especially important, because where many layers of cementitious material are applied on top of each other to create a 3-dimensional object, support for any subsequent layers must be provided by the underlying layers.

It is therefore desirable to provide methods and materials to manufacture 3-dimensional objects with low density and sufficient compressive strength by means of additive manufacturing.

One way to achieve higher compressive strength of cementitious materials is to increase the packing density of fillers and aggregates used.

For example, KR101135018 discloses a lightweight repair mortar with improved compressive strength by incorporation of foamed glass particles and of certain fly ash. The improved compressive strength is achieved by combining smaller particles of the fly ash with larger particles of the foamed glass to optimize the packing.

Despite the numerous solutions described in literature for lightweight cementitious materials, there is still a need to provide improved methods and materials for the 3-D printing of lightweight 3-dimensional objects.

### Summary of the invention

It is an objective of the present invention to provide methods and materials for the printing of lightweight 3-dimensional objects with the use of cementitious materials as binders. It is a particular objective of the present invention to provide methods and materials suitable to print cementitious 3-dimensional objects which, after curing, have a low density and acceptable compressive strength. It is an additional objective of the present invention to provide methods and materials suitable to print lightweight 3-dimensional objects with the use of cementitious materials as binders and where the heat release from the printed material is low. It is still another objective of the present invention to provide for the use of cured lightweight cementitious 3-dimensional objects as thermal and/or acoustic insulation.

Surprisingly it has been found that these objectives can be solved by a method as claimed in claim 1.

In particular, the methods and materials of the present invention allow to create 3-dimensional objects by additive manufacturing, said objects
(i) having a low density after curing, which density preferably is not more than 1800 kg/m³, preferably not more than 1350 kg/m³,
(ii) having a high compressive strength after curing for 1 day, which compressive strength preferably is at least 15 MPa,
(iii) having a low carbon footprint,
(iv) having less need of finishing,
(v) being useful as infills for structures, especially load bearing structures, and/or
(vi) being useful as thermal and/or acoustic insulation elements or parts thereof.

In particular, the cementitious materials of the present invention or used in methods of the present invention allow for
(i) fast setting, preferably with a setting time of between 20 - 60 min,
(ii) lower temperature release during setting,
(iii) self-levelling characteristics,
(iv) low shrinkage, and/or
(iv) simple mixing with water and/or additives.

Especially, the present invention relies on a particularly suitable combination of cement, slag, and suitable activators as cementitious binder with lightweight aggregate of optimized particle size distribution.

Further aspects of the present invention are the subject of further independent claims. Preferred embodiments are the subject of dependent claims.

### Ways to carry out the invention

In a first aspect the present invention relates to a method of printing a 3-dimensional object, said method comprising the steps of
a) mixing a dry cementitious composition with water,
b) conveying the mixture obtained under a) to a print head,
c) applying the mixture obtained under a) from said print head to form a 3-dimensional object,
d) curing the 3-dimensional object obtained in step c),
wherein said dry cementitious composition comprises (in each case relative to the total dry weight of the composition)
i) 20 - 75 w%, preferably 30 - 67 w% of a cementitious binder which itself comprises ia) at least one cement,
   ib) at least one type of slag and/or calcined clay, and
   ic) optionally at least one activator for said slag,
ii) 5 - 50 w%, preferably 10 - 40 w% of at least two lightweight aggregates of different particle size,
iii) optionally further aggregates and/or fillers, and
iv) optionally further additives,
characterized in that the cured 3-dimensional object has a density of not more than 1800 kg/m³, preferably not more than 1350 kg/m³, and has a compressive strength of at least 15 MPa after 1 day of curing.

Within the present context the terms "additive manufacturing" and "printing" have the same meaning and may be used interchangeably.

According to some embodiments, in a method of the present invention in step c) the mixture obtained under a) is applied layer-by-layer from said print head to form a 3-dimensional object.

According to other embodiments, in a method of the present invention in step c) the mixture obtained under a) is applied into a mold to form a 3-dimensional object.

Within the present context, the term "density" refers to the bulk density of a material, unless it explicitly refers to particle density. The bulk density is the density of the material as is including any porosity of such cured material. Especially, the density does not refer to a complex 3-dimensional object including hollow spaces. Density can be measured according to standard DIN EN 12190.

Compressive strength can be measured according to standard ASTM C109.

A dry cementitious composition is a composition comprising at least one cement and essentially is free of water. Essentially free means that the water content is not more than 5 w%, preferably not more than 1 w%, relative to the total weight of the cementitious composition. The mixing in step a) is preferably performed such that the dry cementitious composition is mixed with water in a water to powder weight ratio of 0.2 - 1.0, more preferably 0.2 - 0.4.

A cement within the present context is a Portland cement of the type CEM I, CEM II, or CEM IV (according to standard EN 197-1) or a calcium aluminate cement (according to standard EN 14647:2006-01) or a calcium sulphoaluminate cement or a mixture thereof. The at least one cement of the present invention may not be a cement of type CEM II/A-S or CEM II/B-S. Of course, cements produced according to relevant alternative standards, for example the relevant ASTM or Chinese standards, are likewise suitable. Furthermore, white cement can be used as a mineral binder of the present invention. A cement of the present invention may comprise up to 40 wt.-%, preferably up to 35 wt.-%, especially up to 20 wt.-%, each based on the total dry weight of the cement, of calcium sulfate. The calcium sulfate may be present in the form of calcium sulfate-hemihydrate, calcium sulfate-dihydrate and/or anhydrite. A cement of the present invention may also comprise one or more pozzolanes and/or latent hydraulic materials chosen from clay, calcined clay, especially metakaolin, kiln dust, microsilica, fly ash, pyrogenic silica, precipitated silica, silica fume, zeolite, rice husk ash, burnt oil shale, and natural pozzolanes such as pumice, trass, and finely ground limestone.

According to embodiments, the at least one cement is selected from Portland cement of the type CEM I, CEM II, or CEM IV according to standard EN 197-1 with the exception of CEM II/A-S or CEM II/B-S, calcium aluminate cement according to standard EN 14647:2006-01, calcium sulfoaluminate cement, puzzolane, latent hydraulic binder, or mixtures thereof.

According to embodiments, in a method of the present invention, the at least one cement is a cement of type CEM I, CEM II or CEM IV according to standard EN 197-1, but not chosen from CEM II/A-S or CEM II/B-S, optionally comprising up to 40 wt.-%, preferably up to 35 wt.-%, especially up to 20 wt.-%, each based on the total dry weight of the cement, of calcium sulfate.

According to embodiments, in a method of the present invention, the at least one cement is a mixture of Portland cement of type CEM I according to standard EN 197-1 with a calcium aluminate cement according to standard EN 14647:2006-01 and/or a calcium sulphoaluminate cement, preferably a calcium sulphoaluminate cement.

Preferably, a weight ratio of Portland cement to calcium aluminate and/or calcium sulphoaluminate cement is 20:1 to 1:1, more preferably 10:1 to 2:1.

A calcined clay is a clay material that has been put to a heat treatment, preferably at a temperature between 500 - 900 °C, or in a flash calcination process at temperatures between 800 - 1100 °C. Calcined clay may be obtained from clay minerals of the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. A very preferably type of calcined clay is metakaolin.

The term "slag" within the present context encompasses steel making slag, slag from other metallurgical process, and waste incineration slag. Especially, the slag is selected from granulated blast furnace slag (GBFS), basic oxygen furnace slag (BOF slag), ladle slag or electric arc furnace slag, most preferably from GBFS of BOF slag.

According to embodiments, a weight ratio of Portland cement to slag is 1:2 or higher, especially between 1:2 and 10:1. It has been found that such weight ratios of Portland cement to slag lead to a favorable heat release from the 3-dimensional object during printing and curing thereof. Where a weight ratio higher than 10:1 is used, i.e. where more Portland cement relative to slag is used, more heat is released in shorter time. The latter may lead to inhomogeneous curing and/or cracking. Especially, the weight ratio of Portland cement to slag is such, that the maximum heat release from the 3-dimensional object during printing and curing is half of the value of the same 3-dimensional object when only Portland cement is used. The maximum heat release can be determined from heat flow curves measured in an isothermal process as described in standard ASTM C1702-17, for example measured on an instrument i-CAL 8000 from Calmetrix. An especially preferred weight ratio of Portland cement to slag is 1:1.3.

The at least one activator is preferably chosen from oxides, hydroxides, hydrogen carbonates, carbonates, silicates and sulfates of alkali metals or alkaline earth metals.

The term "lightweight aggregates" stands in particular for aggregates with a particle density ≤ 2'000 kg/m³, preferably ≤ 1'500 kg/m³, especially ≤ 1'000 kg/m³ or as low as 25 - 250 kg/m³. The particle density of an aggregate is the ratio between the mass of the particle material and the volume occupied by the individual particles. This volume includes the pores within the particle but does not include voids between the particles The particle density can be measured according to standard EN 1097-6:2013.

Especially, the particles of the aggregates can have any spherical and/or non-spherical geometric shape, either uniform or non-uniform. For example, the particles can be spherical-, conical-, polygonal-, cubic-, pentagon-, hexagon-, octagon-, prismatic and/or polyhedral-shaped, circular, elliptical, oval, square, rectangular, triangular or with polygonal cross sections.

According to embodiments of the present invention, lightweight aggregates comprise or consist of glass particles, wood particles, cork, rubber particles, layered particles, plastic particles, volcanic rock such as pumice, and/or expanded slate.

Most preferred particles are glass particles, especially foam glass and/or glass microspheres. According to most preferred embodiments, the lightweight aggregates comprise or consist of glass particles, especially foam glass and/or glass microspheres.

Foam glass is glass which has been foamed to produce a cellular structure with closed cells. The particle density of foamed glass typically is between 100 - 250 kg/m³. Glass microspheres are hollow spheres of glass. Glass microspheres can for example be produced by heating tiny droplets of water glass in a process of ultrasonic spray pyrolysis. Optionally, glass microspheres can be coated, for example with a silane coating. The particle density of glass spheres can be between 400 - 1400 kg/m³.

In particular, a particle size of the lightweight aggregates is from 0.0001 - 5 mm, especially 0.05 - 3 mm, preferably 0.1 - 2 mm, in particular 0.1 - 1 mm.

The particle size can e.g. be determined by laser diffraction as described in ISO 13320:2009. Preferably, a particle size of non-spherical or irregular particles is represented by the equivalent spherical diameter of a sphere of equivalent volume. Especially, throughout the present invention, the lower values of the ranges given for the particle size represent D1 values whereas the upper values of the ranges given for the particle size represent D99 values. Put differently, in this case, 1% of the particles have a lower particle size than the lower value of a range, whereas 1% of the particles have a larger particle size than the upper value of a range. As such, particle sizes always refer to an ensemble of particles. A particle size D50 refers to the particle size where 50% of the particles are bigger and 50% of the particles are smaller. The particle size D50 is also meant to be the mean particle size.

According to embodiments, the at least two aggregates in a cementitious composition of the present invention differ in their chemical composition and differ in their particle size. According to other embodiments, the at least two aggregates are of the same chemical composition but differ in their physical properties, especially in their particle size. It is especially preferably, if two or three different lightweight aggregates are used. In particular, a cementitious composition of the present invention comprises two or three, preferably three, lightweight aggregates of different particle size. Different particle size means that the particle size distributions of the two or three, preferably three lightweight aggregates differ. For example, a first lightweight aggregate may have a particle size of 1 - 300 µm, a second lightweight aggregate may have a particle size of from 250 - 500 µm, and a third aggregate may have a particle size of from 500 - 1000 µm.

According to embodiments, about one third of the lightweight aggregate present in the dry cementitious composition have a particle size of below 200 µm, about one third of the lightweight aggregate present in the dry cementitious composition have a particle size of between 200 - 500 µm, and about one third of the lightweight aggregate present in the dry cementitious composition has a particle size of more than 500 µm.

It is particularly preferable for a composition of the present invention to comprise three types of glass particles, preferably selected from foam glass and/or glass microspheres.

According to embodiments, a cementitious composition of the present invention comprises two types of lightweight aggregate, whereby a first type of lightweight aggregate has a particle size of 1 - 300 µm and a second type of lightweight aggregate has a particle size of 250 - 500 µm. Whereby, preferably, both types of lightweight aggregate are glass particles.

In particular, a weight ratio of the first type of particles having a smaller particle size to the second type of particles having a larger particle size is from 1:2 - 8:1, in particular 1:1 -5:1, especially 2:1 -4:1.

According to embodiments, a cementitious composition of the present invention comprises three types of glass particles as lightweight aggregate, whereby a first type of glass particle has a particle size of 1 - 300 µm, a second type of glass particle has a particle size of 250 - 500 µm, and a third type of glass particle has a particle size of 500 - 1000 µm.

According to some embodiments, a cementitious composition of the present invention comprises three types of lightweight aggregate, whereby a first type of lightweight aggregate is selected from foam glass and/or glass microspheres and has a particle size of 1 - 300 µm, a second type of glass particle is selected from foam glass and/or glass microspheres and has a particle size of 250 - 500 µm, and a third type of lightweight aggregate is selected from foam glass, glass microspheres, and/or pumice and has a particle size of 500 - 1000 µm.

In particular, a weight ratio of the first type of particles having a particle size of 1 - 300 µm to the second type of particles having a particle size of 250 - 500 µm to the third type of particles having a particle size of 500 - 1000 µm is 1 : 1 - 2 : 0.5 - 1.5.

The cementitious composition of the present invention may additionally comprise further aggregates and/or fillers. Any further aggregate and/or filler can be aggregates and/or fillers normally used in cementitious materials and having a particle density that is > 2'000 kg/m³, preferably > 2'100 kg/m³, especially > 2'200 kg/m³. The particle density can be measured according to standard EN 1097-6:2013. In particular, the further aggregates and/or fillers are selected from calcareous, silico calcareous materials, and/or metallic aggregates. Examples of suitable further aggregates and/or fillers include sand, quartz, calcium carbonate, gravel, basalt, metallic aggregates, and/or construction demolition waste, especially from sand and/or calcium carbonate. Calcium carbonate is especially meant to include limestone and dolomite. Calcium carbonate and ultra-fine limestone are a particularly preferred further aggregate and/or filler. Ultra-fine limestone is characterized by a mean particle size of not more than 63 microns, especially between 1 - 50 microns.

The cementitious composition of the present invention may additionally comprise further additives. Further additives are selected from accelerators, retarders, rheology modifiers, plasticizers, superplasticizers, water retention agents, redispersible polymers, anti-shrinkage agents, anti-corrosion agents, hydrophobizing agents, color pigments, biocides, air-entraining agents, fibers, and/or defoamers.

It is especially preferred that a cementitious composition of the present invention comprises an additional additive selected from accelerator, superplasticizers and/or anti-shrinkage agent. An addition of fibers, such as steel fibers, cellulose fibers, PE fibers, or PP fibers is possible and especially suitable to increase the flexural strength.

According to embodiments, in a method of the present invention an additional additive, preferably an accelerator, is admixed during conveying or in the print head.

Particularly preferred accelerators are alkali metal or alkaline earth metal chlorides, nitrates, nitrites, thiocyanates, calcium silicate hydrates, aluminum sulphates, and mixtures thereof. Accelerators may be added in powder form or in the form of aqueous suspensions or solutions. The addition in the form of aqueous suspensions or solutions is generally preferred because it allows for more precise metering and better mixing. The amount of accelerator added may vary in a wide range but typically is between 0.1 - 10 w% relative to the dry weight of cement.

Superplasticizer within the present context are selected from lignosulphonates, sulfonated melamine formaldehyde resins, and polycarboxylate ethers or esters. Especially preferably, polycarboxylate ethers or esters, which are abbreviated throughout this invention as PCE.
polycarboxylate ethers or esters (PCE) of the present invention comprise
   (i) repeating units A of the general structure (I) 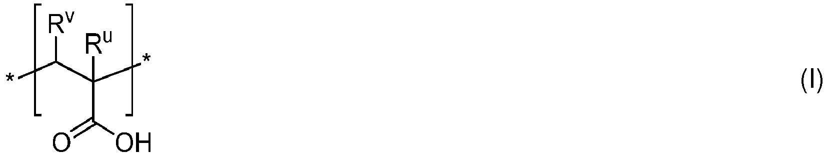 and
   (ii) repeat units B of the general structure (II), 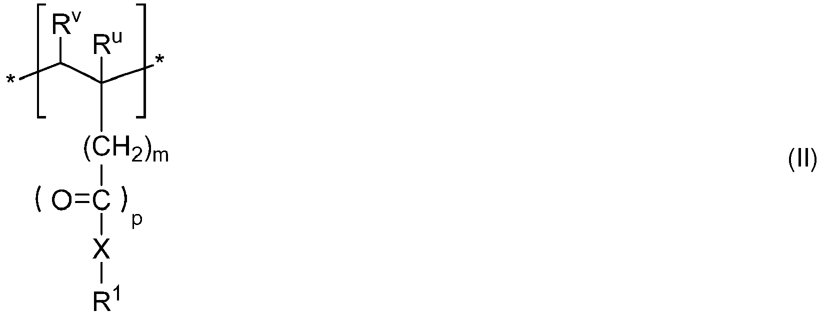 wherein
each R^{u} independently represents hydrogen or a methyl group,
each R^{v} independently represents hydrogen or COOM, wherein M independently is H, an alkali metal, or an alkaline earth metal,
m = 0, 1, 2 or 3,
p = 0 or 1,
X independently of each other is O or NH,
each R1 is independently -(CH₂)_{z}-[YO]ₙ-R⁴, where Y is a C₂ to C₄ alkylene and R⁴ is H, C₁ to C₂₀ alkyl, -cyclohexyl, -alkylaryl, or a -N(-Rⁱ)ⱼ-[(CH₂)_{z}-PO₃M]₃₋ⱼ, z = 0, 1, 2, 3, or 4 n = 2 - 350, j = 0, 1 or 2, Rⁱ represents a hydrogen atom or an alkyl group having 1 - 4 carbon atoms, and M represents a hydrogen atom, an alkali metal, an alkaline earth metal or an ammonium ion,
and wherein the repeating units A and B in the PCE have a molar ratio of A : B in the range of 10 : 90 - 90 :10.

Preferably, PCE of the present invention consist to at least 50 mol%, more preferably at least 75 mol%, especially at least 90 mol% of repeating units A and B. Repeating units A and B may be arranged randomly, alternating, block-wise or with a gradient structure.

PCE of the present invention can be prepared by processes of radical polymerization of suitable monomers. Suitable conditions for carrying out free radical polymerization are known to the skilled person per se and are described, for example, in EP 1103570 (Nippon Shokubai). PCE of the present invention can be prepared by a polymer-analogous esterification reaction. Suitable processes for the preparation of PCE of the present invention by polymer-analogous esterification are known to the skilled person per se and are described, for example, in EP 1138697 (Sika AG).

Of course, mixtures of different PCE can be used in the context of the present invention, and the PCE can be in liquid and/or solid form.

Suitable shrinkage reducing agents (SRA) are selected from oxyalkylene glycols, alkyl ether oxyalkylene glycols, C₄-C₆ alcohols, alkoxylated polyols, such as alkoxylated glycerine and alkoxylated erythritol, aminoalcohols, alkoxylated alkyl amines, fluorinated sufactants. SRA may be suitably combined with expansive MgO, superabsorbent polymers, or defoamers.

In another aspect the present invention relates to a 3-dimensional object obtained by a method as described above.

Any embodiments described above also apply to this aspect.

The shape and size of a 3-dimensional object obtained by a method of the present invention is not particularly limited. In particular, it may be of considerable height, for example higher than 2 meters or higher than 10 meters, and even as high as 50 meters. The density of not more than 1800 kg/m³, preferably not more than 1350 kg/m³, of the cured 3-dimensional object and the compressive strength of at least 15 MPa after 1 day of curing enable such height.

A 3-dimensional object of the present invention may be a building or part of a building. It may be a load bearing structure or part of a load bearing structure or it may be a decorative object.

According to embodiments, 3-dimensional objects of the present invention are used as infill for structures, especially for load bearing structures. The use as infill has the advantages that the structure becomes more stable at lower total weight and that additional thermal and/or acoustic insulation is provided. For use as infill for structures, the 3-dimensional objects of the present invention may be in the form of blocks, in the form of granules, or in the form of a coarse powder. It is also possible, that for the use as infill, the cementitious composition as described above is mixed with a sufficient amount of water to enable self-levelling properties and then such mixture is applied into a mold to form a 3-dimensional object.

According to further embodiments, a 3-dimensional object of the present invention is a thermal and/or acoustic insulation panel or forms part of a thermal and/or acoustic insulation system.

The 3-dimensional object of the present invention may have a thermal conductivity of 0.8 W/m•K or lower, preferably of 0.5 W/m•K or lower, more preferably of 0.2 W/m•K or lower, still more preferably of 0.1 W/m•K or lower. Thermal conductivity can be measured with the guarded hotplate method as described in standard EN 12664:2001.

In another aspect, the present invention relates to a dry cementitious composition comprising (in each case relative to the total dry weight of the composition):
ia) 15 - 30 w% of Portland cement,
ib) 3 - 7 w% of calcium aluminate cement and/or calcium sulfoaluminate cement,
ic) 15 - 35 w% of slag and/or calcined clay
ii) 10 - 33 w% of at least two lightweight aggregates of different particle size,
iii) 5 - 30 w% of further aggregates and/or fillers, especially of calcareous or silico-calcareous aggregates and/or fillers,
iv) 1 - 2 w% of further additives.

All features and embodiments described above also apply to this aspect.

Especially, the at least one cement is a mixture of Portland cement and/or calcium aluminate cement and/or calcium sulphoaluminate cement in a weight ratio of 20:1 to 1:1, more preferably 10:1 to 2:1. Optionally, metakaolin is additionally present. The slag, the activator for the slag, and the lightweight aggregates are as described above. A suitable further filler is superfine limestone. Preferably, superfine limestone has a particle size of 0 - 50 µm, preferably 0.1 - 10 µm. It is especially preferred that shrinkage reducing agents and superplasticizers are additionally present as further additives

A particularly preferably dry cementitious composition thus consists of (in each case relative to the total dry weight of the cementitious composition):
ia1) 20 - 25 w% of Portland cement,
ia2) 3 - 7 w% of calcium aluminate cement and/or calcium sulfoaluminate cement,
ib) 25 - 35 w% of ground granulated blast furnace slag or basic oxygen furnace slag,
ic) optionally 0.1 - 1 w% of at least one activator for said slag
ii) 10 - 33 w% of at least two lightweight aggregates of different particle size,
iii) 5 - 30 w% of sand, calcium carbonate, superfine limestone, or mixtures thereof,
iv) 1 - 2 w% of superplasticizers, thickeners, shrinkage reducing agents, defoamer or mixtures thereof.

The dry cementitious composition of the present invention can be mixed with water, preferably in a water to powder weight ratio of 0.2 - 1.0, more preferably 0.25 - 0.6, and then left to cure to a 3-dimensional object which has a density of not more than 1800 kg/m³, preferably not more than 1350 kg/m³, and has a compressive strength of at least 15 MPa after 1 day of curing.

The present invention also relates to the use of a dry cementitious composition as described above in a method as described above.

In particular, the method of the present invention can be performed with a device as described in the following. Thus, any features described in the following in connection with the device can be implemented in the method described above accordingly.

A still further aspect of the present invention is directed to a device for producing a 3-dimensional object from a curable cementitious composition with an additive manufacturing process, especially a robotic system, whereby the device comprises a supply device and at least one inlet nozzle for adding at least one additive into the curable cementitious composition, whereby the supply device and/or the inlet nozzle is controllable with a control unit, and the control unit is configured for controlling the proportion of the at least one additive. Here and in the following, a curable cementitious composition relates to a dry cementitious composition as described above and mixed with water.

In particular, the device is configured for performing the above described method. Thus, any features described in connection with the method above can be implemented in the device accordingly.

Especially, the device comprises a flow meter, a pressure sensor and/or a dosing valve connected with the control unit for controlling the flow rate or proportion of the curable cementitious composition. If the device is configured for adding an additive into the curable cementitious composition, the device preferably comprises a flow meter, a pressure sensor and/or a dosing valve connected with the control unit for the additive. This allows for controlling the flow rate or proportion of the additive independently.

In particular, in a first embodiment, the mixing device comprises a separate supply device and a separate inlet nozzle for each of the additives. Especially, each of the separate supply devices and/or each of the separate inlet nozzles are controllable with the control unit. This allows for separately introducing each of the additives into the curable cementitious composition without being premixed before.

In another highly preferred embodiment, the mixing device comprises a manifold with a separate inlet port for each of the additives and a common outlet port in fluid communication with a single inlet nozzle. This allows for separately dosing each of the additives into the manifold and premixing the additives before introducing the mixed additives via the single inlet nozzle into the curable cementitious composition.

The device preferably comprises a print head movable in at least one spatial direction to form the 3-dimensional structure. The print head has a print head outlet, especially an outlet nozzle, to apply the curable cementitious composition. If desired, the print head can comprise a controllable outlet, especially in the form of an openable and closable outlet nozzle. In this case, the openable and closable outlet nozzle preferably is controllable with the control unit.

In particular, the device comprises a supply line for supplying the curable cementitious composition to the print head.

Preferably, there is at least one mixing stage or mixing unit, especially a static and/or dynamic mixer, arranged upstream the supply device and the inlet nozzle or upstream the additive mixing device, if the latter is present. Especially, the at least one mixing stage is arranged such that the curable cementitious composition is mixed before entering the supply line and/or when passing the supply line.

Preferably, the supply line is in fluid communication with one or more receptacles comprising individual components of the curable cementitious composition, e.g. cement, slag, activator, water, lightweight aggregates and/or additives, which can be mixed in the a least one mixing stage before and/or during entering the supply line.

In particular, the device comprises at least one mixer, especially a static and/or dynamic mixer, which is arranged downstream the supply device and the inlet nozzle for adding an additive into the curable cementitious composition or downstream the additive mixing device, if the latter is present. In particular, the at least one mixer is arranged between (i) the print head outlet, especially the outlet nozzle, and (ii) the supply device and the inlet nozzle for adding an additive into the curable cementitious composition, or between (i) the print head outlet, especially the outlet nozzle, and (ii) the additive mixing device.

In a further preferred embodiment, the device comprises an additive supply device, optionally with an additive inlet nozzle, which is configured for adding an additive to the curable cementitious composition in the print head, in the mixing device and/or in the supply line upstream the print head. The additive is an additive for controlling the chemical and/or physical properties of the setting curable cementitious composition as described above. The additive supply device and/or the additive inlet nozzle preferably are controllable, in particular with the above described control unit.

Further preferred, the device comprises a measuring unit, which preferably is arranged upstream the print head and which is designed to determine the flow properties, e.g. the flow rate, of the curable material in the supply line. Especially, the measuring unit includes an ultrasonic transducer. The measuring unit preferably is connected with the control unit. In this case, the control unit preferably is configured for controlling the proportion of the at least one coloring suspension in consideration of the flow properties of the curable material in the supply line.

In particular, the control unit of the device includes a processor, a memory unit, and a plurality of interfaces for receiving data and a plurality of interfaces for controlling individual components of device.

Further advantageous embodiments of the invention are evident from the exemplary embodiments.

### Brief description of the drawings

The drawings used to explain the embodiments show:
- Fig. 1: An exemplary system for producing a 3-dimensional object with an additive manufacturing process of the present invention.
- Fig. 2: A photo showing a method of the present invention where a mixture of cementitious material with water is applied layer-by-layer from a print head to form a 3-dimensional object.

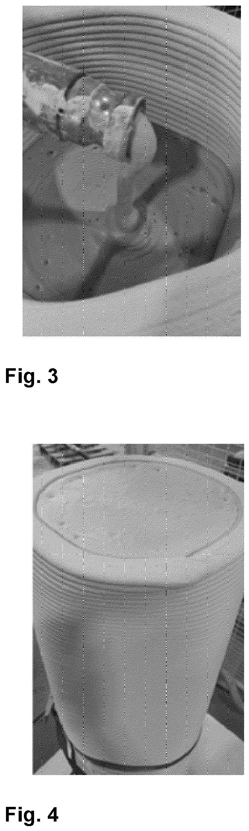

- Fig. 3: A photo showing a method of the present invention where a mixture of cementitious material with water is applied into a mold to form a 3-dimensional object.
- Fig 4: A photo showing a 3-dimensional object filled with a mixture of cementitious material with water of the present invention.

### System for producing a 3-dimensional object with an additive manufacturing process

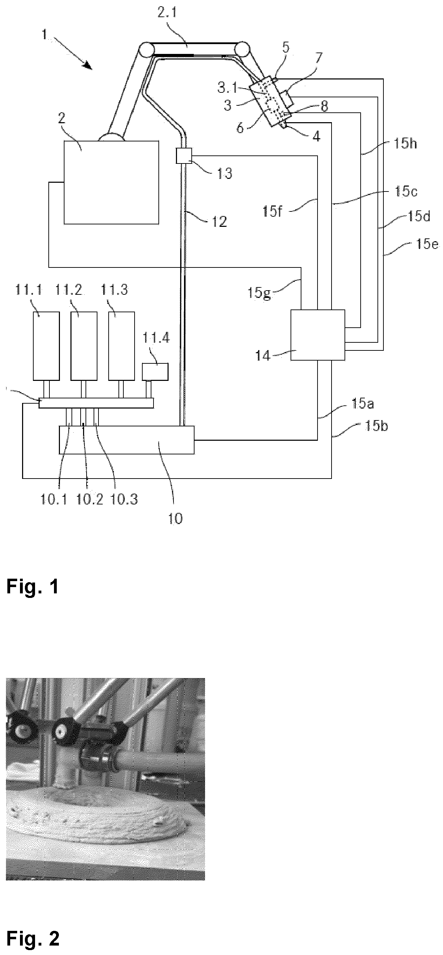

Fig. 1 schematically shows a system 1 for carrying out a process according to the invention.

The system 1 comprises a movement device 2 with a movable arm 2.1. A print head 3 is attached to the free end of the arm 2.1, which can be moved by the arm 2.1 in all three spatial dimensions. This allows the print head 3 to be moved to any position in the working area of the movement device 2.

Inside, the print head 3 has a tubular passage 3.1 extending from the end face facing the arm 2.1 (at the top in Fig. 1) to the opposite and free end face for the passage of mixture of cementitious material with water. At the free end, the passage 3.1 opens into a controllable outlet 4 in the form of a nozzle which may be continuously openable and closable.

An inlet nozzle 5 for adding an additive opens laterally into the passage 3.1 in a region facing the arm 2.1. Through the inlet nozzle 5, an additive, for example a rheological aid, can be added to the mixture of cementitious material with water moving through the passage 3.1 as required.

Furthermore, inside the print head 3 downstream with respect to the inlet nozzle, a static mixer 6 is arranged in the passage 3.1, which additionally mixes the mixture of cementitious material with water and the optional additive.

In the area of the controllable outlet 4, a measuring unit 8 is arranged for determining the pressure in the tubular passage 3.1. A sampling rate of the measuring unit 8 is, for example, 10 Hz.

A device 7 for deaerating the mixture of cementitious material with water is also attached to the print head 3. The device is designed as a vacuum treatment device and makes it possible to reduce the air content in the mixture of cementitious material with water. For this purpose, for example, a section of the wall of the passage 3.1 can be designed as a gas-permeable membrane, so that air is drawn out of the mixture of cementitious material with water by applying a vacuum outside the passage 3.1.

The system 1 for applying a mixture of cementitious material with water also has a feed device 9 which corresponds on the input side with containers 11.1, 11.2, and optionally 11.3 as well as 11.4. Container 11.1 contains the first component, which is a dry cementitious composition according to the present invention. The second component, which is present in the second container 11.2, consists of water. The third component is optional. If present, the third component is present in the third reservoir 11.3 and is a further additive, for example a superplasticizer in the form of a polycarboxylate ether. In the optional additive reservoir 11.4 there is optionally present, for example, a rheological aid

On the output side, the feed device 9 has at least two, optionally three separate outlets, each of which is connected to one of inlets 10.1, 10.2, and optionally 10.3 of a mixing device 10. The feed device 9 also has individually controllable metering devices (not shown in Fig. 1), so that the individual components in the individual containers 11.1, 11.2, and optionally 11.3 as well as 11.4 can be metered individually into the mixing device 10.

A further outlet of the feed device is connected to the inlet nozzle 5 (not shown in Fig. 1), so that optional additive can be fed from the additive reservoir 11.4 into the inlet nozzle 5 via a further metering device of the feed device 9.

The mixing device 10 is designed as a static mixer or as a dynamic mixer, preferably as a continuous dynamic mixer and may comprise, in addition thereto, an integrated conveying device in the form of a screw conveyor. In the mixing device, the individually metered components are mixed together and conveyed into the flexible line 12 attached to the outlet side of the mixing device. In operation, the mixing and conveying of the mixture of cementitious material with water can take place continuously.

The mixture of cementitious material with water can be conveyed into the print head 3 via the flexible line 12, which opens into the tubular passage 3.1 at the end of the print head facing the arm 2.1, and continuously applied through the controllable outlet 4.

Also part of the system 1 is a measuring unit 13, which is integrated into the delivery line 12 in the area between the mixing device 10 and the print head 3. The measuring unit includes, for example, an ultrasonic transducer which is designed to determine the flow properties of the mixture of cementitious material with water. A sampling rate of the measuring unit 13 is, for example, 10 Hz.

A central control unit 14 of the system 1 includes a processor, a memory unit, and a plurality of interfaces for receiving data and a plurality of interfaces for controlling individual components of the system 1.

In this regard, the mixing device 10 is connected to the control unit 14 via a first control line 15a, while the feeding device is connected to the control unit 14 via a second control line 15b. As a result, the individual components in the containers 11.1, 11.2, and optionally 11.3 can be metered into the mixing device 10 via the central control unit in accordance with predetermined recipes stored in the control unit and conveyed into the flexible line 12 at adjustable conveying rates.

The controllable outlet 4, the inlet nozzle 5, and the device 7 for deaerating the mixture of cementitious material with water at the print head are each connected to the control unit 14 via a separate control line 15c, 15d, 15e as well and can be controlled or monitored by the latter.

The movement device 2 is also connected to the control unit 14 via a further control line 15g. This means that the movement of the print head 3 can be controlled via the control unit 14.

The measuring unit 8 is connected to the control unit 14 by a data line 15h, so that print data recorded in the measuring unit can be transmitted to the control unit 14.

Similarly, the measuring unit 13 is connected to the control unit 14 by a data line 15f, so that data recorded in the measuring unit characterizing the flow properties can be transmitted to the control unit 14.

The control unit 14 is thereby programmed, for example, in such a way that:
(i) the addition rates of the components with the feeding device 9 are controlled depending on the flow properties of the mixture of cementitious material with water in the flexible line 12 determined via the measuring unit 13;
(ii) the feeding device integrated in the mixing device 10 is controlled depending on the pressure determined via the measuring unit 8 and the structure of the 3-dimensional object to be produced with the material of the present invention;
(iii) the addition rate of the additive via the inlet nozzle 5 is controlled depending on the flow properties of the mixture of cementitious material with water determined via the measuring unit 13 and the structure of the 3-dimensional object to be produced;
(iv) the degree of deaeration of the mixture of cementitious material with water in the apparatus 7 is controlled in accordance with the flow properties of the mixture of cementitious material with water detected via the measuring unit 13;
(v) the movement device 2, and thus the position of the print head 3, is controlled in dependence on a model of the 3-dimensional object to be produced stored in the data memory of the control unit 14.

### Examples

The following table 1 shows exemplary compositions E1 to E-3 according to the present invention and comparative compositions C-1 to C-3 not according to the present invention. The compositions were obtained by thoroughly mixing the individual components in a Hobart mixer until visually homogeneous.

**Table 1: example composition (in g)**

| | **E-1** | **E-2** | **E-3** | **C-1** | **C-2** | **C-3** |
|---|---|---|---|---|---|---|
| Portland cement (CEM 152.5 N) | 23 | 20 | 20 | 20 | 45 | 20 |
| Calcium sulfoaluminate cement | 3.5 | 4 | 4 | 4 | 6 | 4 |
| Calcium aluminate cement | 0 | 2.5 | 0 | 5 | 0 | 2.5 |
| Ground granulated blast furnace slag^{*1} | 18 | 35 | 27 | 0 | 0 | 35 |
| Calcined clay^{*2} | 11.5 | 0 | 8 | 0 | 0 | 0 |
| Activator^{*3} | 1 | 0 | 0 | 0 | 0 | 0 |
| Lightweight filler 1 - 300 µm^{*4} | 9 | 3 | 3 | 6 | 4 | 0 |
| Lightweight filler 250 - 500 µm^{*4} | 13.5 | 6 | 6 | 13 | 9 | 11 |
| Lightweight filler 500 - 1000 µm^{*4} | 11 | 2 | 2 | 4 | 3 | 0 |
| Limestone filler^{*5} | 8.4 | 6.5 | 7 | 7 | 8 | 6.5 |
| Calcium Carbonate filler^{*6} | 0 | 20 | 22 | 18 | 24 | 20 |
| Sand (0.06-0.2 mm) | 0 | 0 | 0 | 22 | 0 | 0 |
| Additives^{*7} | 1.1 | 1 | 1 | 1 | 1 | 1 |

| | | | | | | |
|---|---|---|---|---|---|---|
| *1 Blaine surface 4500 cm²/g *2 < 0.02 wt.-% residue on 325 mesh; Chapelle index 1'000 mgCa(OH)₂/g (acc.NF P18-513:2012) *3 mixture of Ca(OH)₂ and Na₂CO₃ (4:1 by weight) *4 closed cell micro beads *5 purity: 99.3% CaCO₃; BET surface: 10 m²/g; particle size distribution: D98: 5 µm, D50: 0.8 µm *6 purity: 99.3% CaCO₃; particle size distribution: D50: 325 µm *7 mixture of polycarboxylate ether superplasticizer, defoamer, thickener, redispersible polymer powder | | | | | | |

The dry compositions of above table 1 were mixed with water in a water: powder weight ratio (w/p ratio) as indicated in below table 2. Mixing was done at 23°C on a Hobart mixer for 3 min at maximum speed. In case of example E-3, additionally 0.2 w% (relative to the total dry powder components) of an aqueous composition comprising 17 w% of aluminum sulfate were added together with the mixing water. The following table 2 gives an overview of the performance measured.

Flow was measured according to standard ASTM C1437. Initial set-time was measured according to standard ASTM 266. Linear shrinkage was measured according to standard EN 12617-4 on prisms of 40 x 40 x 160 mm within 5h and 24h of mixing with water (negative values designate shrinkage while positive values designate expansion). Compressive strength was measured according to standard ASTM C109 after 24 hours. Density was measured according to standard DIN EN 12190 on prisms of 40 x 40 x 160 mm after 7 days.

Printability was judged from the visual appearance of material extruded from a printing system as described in figure 1. Layers of material having a width of 5 cm and a height of 2 cm were applied. Material judged printable ("yes" in table 2) showed all of the following: individual layers show very limited sagging and do not flow, adhesion between layers is good, a minimum of three layers could be applied on top of each other.

**Table 2: performance measured**

| | **E-1** | **E-2** | **E-3** | **C-1** | **C-2** | **C-3** |
|---|---|---|---|---|---|---|
| w/p ratio | 1.0 | 0.22 | 0.22 | 0.22 | 0.3 | 0.22 |
| Flow [cm] | n.m. | 14 | 14 | 11 | 15 | n.m. |
| Initial set time [min] | n.m. | 40 | 23 | 65 | n.m. | n.m. |
| Linear shrinkage @ 5h [µm/m] | -100 | n.m. | n.m. | n.m. | n.m. | n.m. |
| Linear shrinkage @ 24h [µm/m] | +60 | n.m. | n.m. | n.m. | n.m. | n.m. |
| Compressive strength [MPa] | n.m. | 20.1 | 16.4 | 15 | 14.8 | 10.1 |
| Density @ 7d [kg/m³] | 1100 | 1270 | n.m. | n.m. | n.m. | n.m. |
| Printability | yes | yes | yes | no | no | no |

| | | | | | | |
|---|---|---|---|---|---|---|
| n.m.: not measured | | | | | | |

It can be seen from the above results that printing of materials was not possible for compositions C-1 (comprising sand but no slag or calcined clay), C-2 (comprising high cement content but no slag or calcined clay) or C-3 (comprising lightweight filler of only one particle size).

## Claims

1. A method of printing a 3-dimensional object, said method comprising the steps of
a) mixing a dry cementitious composition with water,
b) conveying the mixture obtained under a) to a print head,
c) applying the mixture obtained under a) from said print head to form a 3-dimensional object,
d) curing the 3-dimensional object obtained in step c),
wherein said dry cementitious composition comprises (in each case relative to the total dry weight of the composition)
i) 20 - 75 w%, preferably 30 - 67 w% of a cementitious binder which itself comprises
ia) at least one cement,
ib) at least one type of slag and/or calcined clay, and
ic) optionally at least one activator for said slag,
ii) 5 - 50 w%, preferably 10 - 40 w% of at least two lightweight aggregates of different particle size,
iii) optionally further aggregates and/or fillers, and
iv) optionally further additives,
**characterized in that** the cured 3-dimensional object has a density of not more than 1800 kg/m³, preferably not more than 1350 kg/m³, and has a compressive strength of at least 15 MPa after 1 day of curing.

2. A method according to claim 1, **characterized in that** in step c) the mixture obtained under a) is applied layer-by-layer from said print head to form a 3-dimensional object.

3. A method according to claim 1, **characterized in that** in step c) the mixture obtained under a) is applied into a mold to form a 3-dimensional object.

4. A method according to any of the preceding claims, **characterized in that** an additional additive, preferably an accelerator, is admixed during conveying or in the print head.

5. A method according to any of the preceding claims, **characterized in that** the at least one cement is selected from Portland cement of the type CEM I, CEM II, or CEM IV according to standard EN 197-1, calcium aluminate cement according to standard EN 14647:2006-01, calcium sulfoaluminate cement, puzzolane, latent hydraulic binder, or mixtures thereof, with the exception of CEM II/A-S or CEM II/B-S.

6. A method according to claim 5, **characterized in that** the at least one cementitious binder comprises Portland cement and slag in a weight ratio of Portland cement to slag of 1:2 or higher, especially between 1:2 and 10:1.

7. A method according to any of the preceding claims, **characterized in that** the dry cementitious composition comprises two or three, preferably three, lightweight aggregates of different particle size.

8. A method according to any of the preceding claims, **characterized in that** the lightweight aggregates comprise or consist of glass particles, wood particles, cork, rubber particles, layered particles, plastic particles, volcanic rock such as pumice, and/or expanded slate.

9. A method according to any of the preceding claims, **characterized in that** the dry cementitious composition comprises two types of lightweight aggregate, whereby a first type of lightweight aggregate has a particle size of 1 - 300 µm and a second type of lightweight aggregate has a particle size of 250 - 500 µm.

10. A method according to any of the preceding claims, **characterized in that** the dry cementitious composition comprises three types of glass particles as lightweight aggregate, whereby a first type of glass particles has a particle size of 1 - 300 µm, a second type of glass particles has a particle size of 250 - 500 µm, and a third type of glass particles has a particle size of 500 - 1000 µm.

11. A method according to any of the preceding claims, **characterized in that** about one third of the lightweight aggregate present in the dry cementitious composition have a particle size of below 200 µm, about one third of the lightweight aggregate present in the dry cementitious composition have a particle size of between 200 - 500 µm, and about one third of the lightweight aggregate present in the dry cementitious composition have a particle size of more than 500 µm.

12. A dry cementitious composition comprising (in each case relative to the total dry weight of the composition):
ia) 15 - 30 w% of Portland cement,
ib) 3 - 7 w% of calcium aluminate cement and/or calcium sulfoaluminate cement,
ic) 15 - 35 w% of slag and/or calcined clay
ii) 10 - 33 w% of at least two lightweight aggregates of different particle size,
iii) 5 - 30 w% of further aggregates and/or fillers, especially of calcareous or silico-calcareous aggregates and/or fillers,
iv) 1 - 2 w% of further additives.

13. Use of a dry cementitious composition according to claim 12 in a method according to at least one of claims 1 - 11.

14. A 3-dimensional object obtained by a method as claimed in at least one of claims 1 - 11.

15. A 3-dimensional object as claimed in claim 14, **characterized in that** it is a thermal and/or acoustic insulation panel or forms part of a thermal and/or acoustic insulation system.

16. A 3-dimensional object as claimed in claim 14, **characterized in that** it is used as infill for structures, especially for load bearing structures.
